Europäisches Patentamt

European Patent Office

Office européen des brevets

(19)

(11) **EP 0 794 489 B1**

(12) **EUROPÄISCHE PATENTSCHRIFT**

(45) Veröffentlichungstag und Bekanntmachung des Hinweises auf die Patenterteilung:
**19.06.2002   Patentblatt 2002/25**

(51) Int Cl.$^7$: **G06F 9/44**, G06F 11/00

(21) Anmeldenummer: **97103549.8**

(22) Anmeldetag: **04.03.1997**

(54) **Verfahren zur rechnergestützten Auswahl von Software-Verfahren, beispielsweise Software-Prüfverfahren**

Method for computer-aided selection of software methods, for example software test methods

Procédé de sélection assisté par ordinateur des procédés logiciels, par exemple des procédés de test de logiciels

(84) Benannte Vertragsstaaten:
**DE FR GB**

(30) Priorität: **07.03.1996   DE 19608889**

(43) Veröffentlichungstag der Anmeldung:
**10.09.1997   Patentblatt 1997/37**

(73) Patentinhaber: **SIEMENS AKTIENGESELLSCHAFT
80333 München (DE)**

(72) Erfinder: **Liggesmeyer, Peter, Dr.
85579 Neubiberg (DE)**

(56) Entgegenhaltungen:

- **P. LIGGESMEYER: "Selecting engineering techniques using fuzzy logic based decision support" PROCEEDINGS IEEE SYMPOSIUM AND WORKSHOP ON ENGINEERING OF COMPUTER-BASED SYSTEMS, 11. - 15.März 1996, FRIEDRICHSHAFEN, DE, Seiten 427-434, XP000672263**
- **P. LIGGESMEYER: "Eine Methode zur Konstruktion von Prüfstrategien für Software" INFORMATIK FORSCHUNG UND ENTWICKLUNG, Bd. 9, Nr. 2, 1994, DE, Seiten 82-92, XP000672211**
- **P. LIGGESMEYER: "A set of complexity metrics for guiding the software test process" SOFTWARE QUALITY JOURNAL, Bd. 4, Nr. 4, Dezember 1995, UK, Seiten 257-273, XP000672374**

**EP 0 794 489 B1**

**Beschreibung**

Der Software-Entwicklung sowie der Software-Qualitätssicherung kommen sehr hohe Bedeutung zu, vor allem, da die Entwicklung von einer reinen Hardware-Entwicklung immer mehr in Richtung der Software-Entwicklung gerichtet ist.

Es gibt unterschiedliche Software-Entwicklungsverfahren die unterschiedliche Vorteile und Nachteile aufweisen. Für unterschiedliche Softwareentwicklungen und somit für jeweils unterschiedliche Entwicklungs-Rahmenbedinungen sind somit jeweils unterschiedliche Entwicklungsverfahren in verschiedenen Entwicklungs-Rahmenbedinungen vorteilhaft einsetzbar. Eine geeignete Auswahl zu treffen unter den bekannten Software-Entwicklungsverfahren, hat somit direkten Einfluß auf die Kosten und die Qualität der zu entwickelnden Software.

Dies gilt ebenso für Software-Prüfverfahren, die wesentliche unterschiedliche Charakteristika aufweisen und somit für jeweils unterschiedliche Prüf-Rahmenbedingungen unterschiedlich geeignet sind. Um eine möglichst effiziente und qualitativ hochwertige Auswahl von Software-Prüfverfahren zu treffen, sind auch hier die Prüf-Rahmenbedingungen zu berücksichtigen. Möglichst viele Fehler in einer entwickelten Software zu finden ist insbesondere von erheblicher Bedeutung bei sicherheitsrelevanten Einsatzgebieten der Software, beispielsweise in der Luftfahrt, oder auch in der Verkehrstechnik.

Es sind verschiedene Software-Prüfverfahren bekannt. Diese sind beispielsweise beschrieben in [1], [2], [3]. Eine Übersicht und Einteilung verschiedener Software-Prüfverfahren ist in [4] zu finden.

Ein Verfahren zur Qualitätssicherung ist als sogenanntes Quality Function Deployment (QFD) aus [5] bekannt.

Aus den Dokumenten [6] und [7] sind Grundlagen über Fuzzy-Logic bekannt.

Aus dem Dokument [8] sind verschiedene Software-Entwicklungsverfahren und eine Einteilung dieser Verfahren in unterschiedliche Gruppen von Software-Entwicklungsverfahren bekannt.

Grundlagen über Software-Prüfmetriken sind beispielsweise in dem Dokument [9] beschrieben.

Sowohl die Software-Entwicklungsverfahren als auch die Software-Prüfverfahren haben jeweils bestimmte Stärken und Schwächen bei unterschiedlichen Anwendungsgebieten bzw. Rahmenbedingungen. Aus diesem Grunde gilt es, für ein bestimmtes Anwendungsgebiet und die spezifischen Rahmenbedingungen jeweils möglichst optimale Software-Entwicklungsverfahren bzw. möglichst optimale Software-Prüfverfahren zu finden. Dies stellt aufgrund der großen Anzahl bekannter Software-Prüfverfahren und Software-Entwicklungsverfahren und deren hoher Komplexität und unterschiedlichen Eigenschaften ein erhebliches Problem dar, da die unterschiedlichen Stärken und Schwächen der einzelnen Verfahren einem Entwickler keineswegs in ihrer Gesamtheit geläufig sind.

Durch P. Liggesmeyer: "Eine Methode zur Konstruktion von Prüfstrategien für Software", INFORMATIK FORSCHUNG UND ENTWICKLUNG, Bd. 9, Nr. 2, 1994, DE, Seiten 82 -92 ist ein regelbasiertes Expertsystem bekannt, das Software-Prüfverfahren für eine vorliegende Prüfsituation auswählt. Die Eignung der Software-Prüfverfahren wird wesentlich von Merkmalen des zu prüfenden Programms und Zusatzinformationen entschieden. Das bekannte System extrahiert dazu anhand von vordefinierten Komplexitätsmetriken automatisch das Komplexitätsprofil der Softwaremodule, für die eine Prüfstrategie gesucht wird, nimmt manuell bereit gestellte Zusatzinformation - z.B. Typ der Spezifikation, der geforderte Grad der Korrektheit, die eventuell vorhandene Fehlererwartung des Testers - entgegen und interagiert mit dem Benutzer zur Auswahl oder Modifikation einer oder mehrerer der vorgeschlagenen Prüfstrategien.

Der Erfindung liegt das Problem zugrunde, aus der Vielzahl von Software-Verfahren unter Berücksichtigung auswählbarer Rahmenbedingungen mit Hilfe eines Rechners eine Auswahl möglichst optimaler Software-Verfahren, beispielsweise Software-Prüfverfahren oder Software-Entwicklungsverfahren, zu ermitteln.

Dieses Problem wird durch das Verfahren gemäß Patentanspruch 1 gelöst.

Es werden in einem ersten Schritt von einem Benutzer Rahmenbedingungen ausgewählt, die von einem Rechner auf einem Bildschirm zur Auswahl angeboten werden. Anhand der ausgewählten Rahmenbedingungen sowie einer zuvor aufgebauten Regelbasis, mit der die Stärken und Schwächen der einzelnen Verfahren für unterschiedliche Rahmenbedingungen beschrieben werden, wird das jeweils optimale Verfahren ermittelt und das ermittelte Verfahren dem Benutzer auf dem Bildschirm dargestellt.

Vorteile bei diesem Verfahren sind unter anderem in der automatischen Auswahl eines möglichst optimalen Verfahrens mit Hilfe eines Rechners zu sehen, sowie in der Geschwindigkeit, mit der das jeweilige Verfahren ermittelt wird. Auch die Flexibilität und die einfache Erweiterbarkeit der Regelbasis ist ein erheblicher Vorteil des erfindungsgemäßen Verfahrens.

Auch die Einfachheit der Auswahl der Rahmenbedingungen stellt einen erheblichen Vorteil des erfindungsgemäßen Verfahrens dar, da auch ein Nicht-Fachmann einfach die jeweilige Auswahl treffen kann. Außerdem wird jedes Anwendungsgebiet sehr genau nachgebildet durch die Auswahl der einzelnen Rahmenbedingungen. Dadurch wird eine sehr gute und für die jeweilige Anwendung optimierte Auswahl von Verfahren ermittelt.

Vorteilhafte Weiterbildungen der Erfindung ergeben sich aus den abhängigen Ansprüchen.

Durch Verwendung von Fuzzy-Logic in einer Weiterbildung des erfindungsgemäßen Verfahrens wird eine sehr genaue, den Rahmenbedingungen sehr gut angepaßte Auswahl der Verfahren möglich. Weiterhin wird eine intuitive Auswahl der Rahmenbedingungen durch den Benutzer möglich, da dieser eine beliebig fein abgestimmte Bewertung einzelner angebotener Rahmenbedingungen treffen kann, und diese durch den Einsatz der Fuzzy-Logic auch bei der Ermittlung des Software-Verfahrens berücksichtigt wird. Ein weiterer Vorteil des Einsatzes von Fuzzy-Logic in dem erfindungsgemäßen Verfahren ist darin zu sehen, daß nicht nur ein optimales Verfahren ermittelt wird, sondern daß mehrere Software-Verfahren mit unterschiedlicher Eignungsbewertung bezüglich der Rahmenbedingungen ermittelt werden und dem Benutzer dargestellt werden, der somit die Möglichkeit hat, aus mehreren alternativen Vorschlägen die ihm am geeignetsten erscheinenden Software-Verfahren zu verwenden. Dies gewinnt besonders an Bedeutung, wenn dem Benutzer der Einsatz des "optimalen" Software-Verfahrens aus irgendeinem Grund nicht möglich ist. In diesem Fall kann er entsprechend auf Alternativen zurückgreifen, für die dem Benutzer auch schon die jeweiligen Eignung angegeben wird.

Zur möglichst genauen Berücksichtigung der von dem Benutzer angegebenen Rahmenbedingungen ist es vorteilhaft, daß die Rahmenbedingungen beispielsweise durch technische Rahmenbedingungen, durch Ziele, die entweder der Software-Entwicklung oder dem Software-Prüfen zugrundeliegen, sowie durch Restriktionen, die in dem jeweiligen Anwendungsgebiet eventuell vorhanden sind, beschrieben werden. Durch deren Berücksichtigung ist es möglich, interaktiv mit dem Benutzer jedes Anwendungsgebiet sehr genau nachzubilden und somit eine sehr gute und für die jeweilige Anwendung optimierte Auswahl von Verfahren zu ermitteln.

In einer weiteren Ausgestaltung des erfindungsgemäßen Verfahrens ist es vorteilhaft, den unterschiedlichen Rahmenbedingungen unterschiedliche Bedeutungen zuzuordnen. Dies verfeinert in noch größerem Maße die Genauigkeit der betroffenen Auswahl.

Ferner wird eine erhebliche Vereinfachung des Verfahrens dadurch erreicht, daß bei der Zuordnung unterschiedlicher Bedeutungen für Prüfziele oder Entwicklungsziele paarweise jeweils für zwei Prüfziele bzw. für jeweils zwei Entwicklungsziele eine paarweise Priorisierung zugeordnet wird.

Ferner ist es vorteilhaft, die Verfahren in Methoden, Techniken und Werkzeuge zu unterteilen. Diese Einteilung erfolgt vorteilhafterweise hierarchisch, wodurch eine sehr effiziente Ermittlung des Software-Verfahrens erreicht wird, da bei bestimmten Rahmenbedingungen schon bestimmte Methoden ausgeschlossen werden können, wodurch Techniken, die auf der jeweils nicht mehr zu berücksichtigenden Methode basieren und ebensolche Werkzeuge in dem Verfahren nicht mehr berücksichtigt werden müssen. Dadurch wird die Durchführung des Verfahrens erheblich beschleunigt.

Eine weitere Verbesserung der von dem erfindungsgemäßen Verfahren ermittelten Ergebnisse wird durch die in einer Weiterbildung vorgesehene Verwendung eines kompensatorischen UND-Operators erreicht.

In den Figuren sind zwei Ausführungsbeispiele des erfindungsgemäßen Verfahrens dargestellt und werden im weiteren näher erläutert.

Es zeigen:

Figur 1    ein Ablaufdiagramm, in dem einzelne Verfahrensschritte des erfindungsgemäßen Verfahrens dargestellt sind;

Figur 2    ein Blockdiagramm, in dem eine Anordnung dargestellt ist mit einem Rechner, einem Bildschirm, einer Tastatur sowie einer Maus, mit der das erfindungsgemäße Verfahren notwendigerweise durchgeführt wird;

Figur 3    ein Blockdiagramm, mit dem mehrere Alternativen für Prüf-Rahmenbedingungen bzw. Entwicklungs-Rahmenbedingungen beschrieben sind;

Figur 4    ein Blockdiagramm, in dem verschiedene Software-Verfahren dargestellt sind.

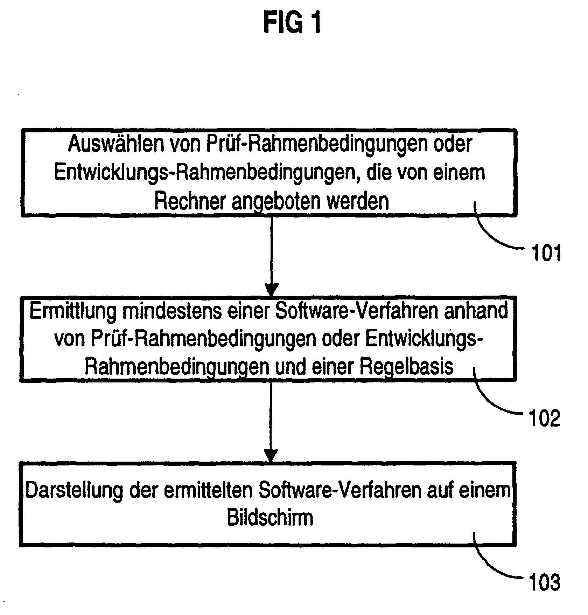

In Figur 1 sind die einzelnen Verfahrensschritte des erfindungsgemäßen Verfahrens in Form eines Ablaufdiagramms dargestellt.

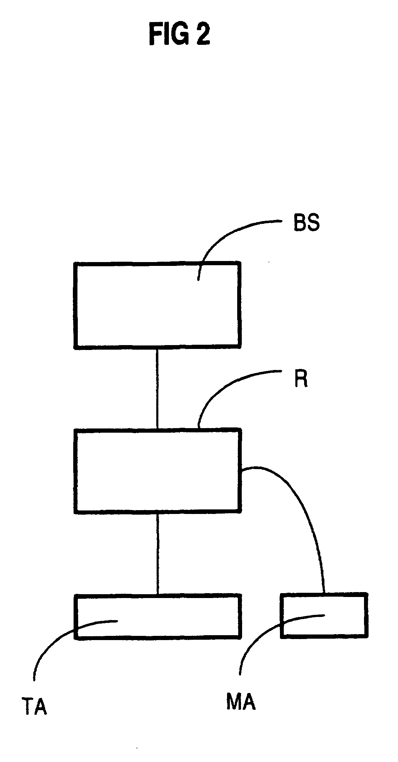

Je nachdem, welche Art von Software-Verfahren SV ausgewählt werden soll, werden in einem ersten Schritt 101 beispielsweise entweder Prüf-Rahmenbedingungen oder Entwicklungs-Rahmenbedingungen ausgewählt. Diese Rahmenbedinungen werden von einem Rechner R vorgegeben und auf einem Bildschirm BS dem Benutzer dargestellt (vgl. Figur 2).

Unter Software-Verfahren SV sind im weiteren sowohl Verfahren zu verstehen, die mit Hilfe eines Rechners durchgeführt werden als auch lediglich die Bezeichnungen einzelner Verfahren, durch die es dem Benutzer dann ermöglicht wird, die Verfahren durchzuführen, möglicherweise auch ohne Zuhilfenahme eines Rechners. Die Ermittlung der Software-Verfahren SV selbst erfolgt jedoch notwendigerweise mit Hilfe des Rechners R.

In einer Weiterbildung des Verfahrens ist es vorteilhaft, die Rahmenbedingungen in Form von Fragestellungen an den Benutzer zu ermitteln. Beispielsweise die fragen werden auf dem Bildschirm BS dem Benutzer dargestellt:, und der Benutzer muß durch Eingabe entsprechender Antworten auf die Fragen die jeweiligen Rahmenbedingungen auswählen bzw. bestimmen. Die Auswahl bzw. Bestimmung kann beispielsweise in einer einfachen Beantwortung der Fragen mit Ja oder Nein erfolgen, sie kann aber auch dadurch geschehen, daß eine prozentuale Wertung im Bereich von 0 Prozent, was einer Situation entspricht, bei der der Gegenstand der Frage in keinster Weise durch die Rahmenbedingungen erfüllt ist, bis hin zu 100 Prozent, bei dem die entsprechende Frage in dem Anwendungsgebiet gänzlich gegeben ist. Die Feinheit der Unterteilung ist frei vorgebbar.

Anhand der bestimmten Rahmenbedingungen sowie einer zuvor aufgebauten Regelbasis, deren Aufbau im weiteren erläutert wird, wird mindestens das eine Software-Verfahren SV ermittelt, das den bestimmten Rahmenbedingungen am besten genügt 102.

In einem letzten Schritt 103 wird das mindestens eine Software-Verfahren SV dem Benutzer auf dem Bildschirm BS dargestellt.

In Figur 2 ist eine Anordnung dargestellt, mit der das Verfahren notwendigerweise durchgeführt wird. Diese Anordnung weist den Rechner R auf sowie den Bildschirm BS und eine Tastatur TA und/oder eine Maus MA, jeweils zur Eingabe von Daten durch den Benutzer in den Rechner R.

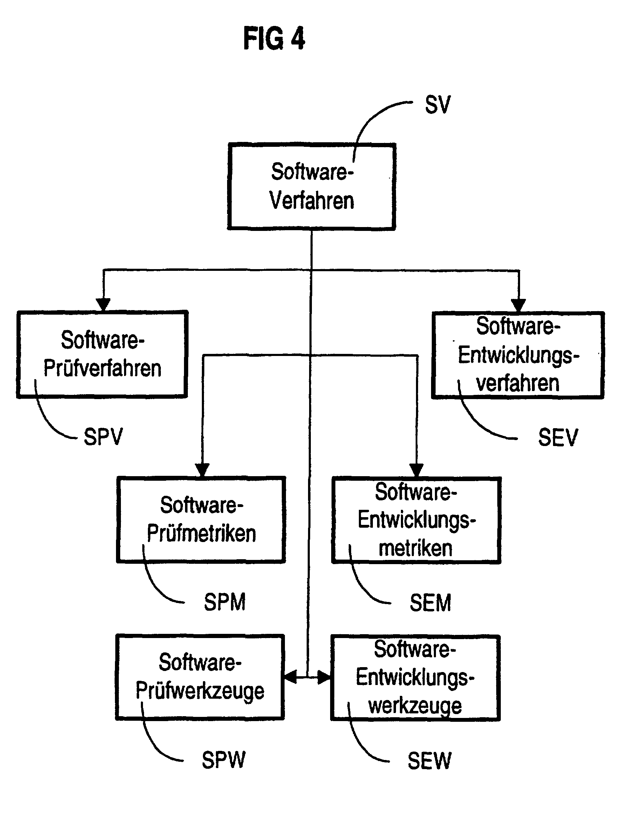

In Figur 4 sind unterschiedliche Alternativen für Software-Verfahren SV dargestellt.

Unter Software-Verfahren SV sind im weiteren beispielsweise zu verstehen:

- Software-Prüfverfahren SPV,
- Software-Prüfmetriken SPM,
- Software-Prüfwerkzeuge SPW,
- Software-Entwicklungsmetriken SEM,
- Software-Entwicklungsverfahren SEV,
- Software-Entwicklungswerkzeuge SEW (vergleiche Figur 4).

Unter Software-Prüfverfahren SPV und Software-Prüfmetriken SPM sind im Zusammenhang dieses Dokumentes beispielsweise folgende Prüfverfahren zu verstehen, die beispielsweise in folgende Kategorien von Prüfverfahren eingeordnet werden können (vgl. [4]) :

- Verfahren zur Verifikation,
- symbolische Testverfahren,
- Verfahren zur statischen Analyse, beispielsweise

   -- Metriken,
   -- Graphiken und Tabellen oder
   -- Anomalieanalyse,

- Dynamische Testverfahren, die im weiteren als Testmethoden bezeichnet werden, die beispielsweise weiter eingeteilt werden können in:

   -- Strukturorientierte Testverfahren,
   -- Funktionsorientierte Testverfahren,
   -- Diversifizierende Testverfahren,
   -- Bereichstestverfahren,
   -- Zufalls-Prüfverfahren,
   -- Testverfahren mit speziell ausgewählten Werten, und
   -- Grenzwertanalyse-Verfahren.

Dabei sind unter den Software-Prüfverfahren SPV sowohl Software-Testverfahren, Software-Analyseverfahren als auch Software-Verifikationsverfahren zu verstehen.

Die Testmethoden können jeweils weiter unterteilt werden in Testtechniken.

Die Strukturorientierten Testverfahren können weiter unterschieden werden in Kontrollflußorientierte Testverfahren sowie in Datenflußorientierte Testverfahren.

Die Kontrollflußorientierten Testverfahren können beispielsweise in folgende Testtechniken unterteilt werden:

- Anweisungsüberdeckungs-Prüfverfahren,
- Zweigüberdeckungs-Prüfverfahren,
- Bedingungsüberdeckungs-Prüfverfahren, einfach, minimal mehrfach oder mehrfach,
- LCSAJ-basierte Testverfahren,
- Boundary-interior Pfadtest-Verfahren,

- Strukturorientierte Pfadtest-Verfahren,
- Pfadüberdeckungs-Prüfverfahren.

Die Datenflußorientierten Testverfahren können beispielsweise in folgende Testtechniken unterteilt werden:

- Defs-/Uses-Kriterien, beispielsweise

  -- all defs-Kriterium,
  -- all p-uses-Kriterium,
  -- all c-uses Kriterium,
  -- all p-uses/some c-uses Kriterium,
  -- all c-uses/some p-uses Kriterium,
  -- all uses-Kriterium,
  -- all du-paths-Kriterium,

- Required k-Tupels-Prüfverfahren,
- Datenkontext-Überdeckungs-Verfahren.

Die Funktionsorientierten Testverfahren können beispielsweise in folgende Testtechniken unterteilt werden:

- funktionale Äquivalenzklassenbildungsverfahren,
- Ursache-Wirkungs-Analyseverfahren,
- Zustandstestverfahren,
- Syntaxtestverfahren.

Die Diverzifizierenden Testverfahren können beispielsweise in folgende Testtechniken unterteilt werden:

- Mutationen-Prüfverfahren,
- Perturbationen-Prüfverfahren,
- Back to Back-Prüfverfahren.

Die Bereichstestverfahren können beispielsweise in folgende Testtechniken unterteilt werden:

- Pfadbereichstestverfahren,
- Testverfahren fehleroffenbarender Unterbereiche,
- Partition-Analyseverfahren.

Zur Durchführung der Software-Prüfverfahren SPV können Software-Prüfwerkzeuge SPW eingesetzt werden. Die Software-Prüfwerkzeuge SPW können beispielsweise in folgende Kategorien von Software-Prüfwerkzeuge SPW unterteilt werden:

- Verifikationswerkzeuge,
- Datenflußanomalie-Analysatoren,
- Zeitmeßwerkzeuge,
- Streßtestwerkzeuge,
- Regressionswerkzeuge,
- Funktionale Testwerkzeuge,
- Strukturelle Testwerkzeuge.

Verschiedene oben genannte Software-Prüfverfahren SPV sind beispielsweise in [1], [2], [3] und [4] beschrieben.

Bei der statischen Analyse von Software werden für die quantitative Bewertung bestimmter Softwareeigenschaften verschiedene Meßgrößen eingesetzt. Die Meßgrößen werden im weiteren als Software-Prüfmetriken SPM bezeichnet. Die Software-Prüfmetriken SPM können beispielsweise in folgende Kategorien eingeteilt werden:

- MTTF (mean time fo failure),
- Fehlerfindungsrate,
- Testmetrik, die wiederum unterteilt werden kann in:

-- strukturelle Testmetrik und

-- funktionale Testmetrik.

Mit Hilfe von Software-Prüfmetriken SPM kann unter anderem der Umfang von Datenstrukturen und Kontrollstrukturen von zu testenden Programmen gemessen werden. Durch den Vergleich der Metrikdaten von mehreren Programmen lassen sich zum Beispiel Fehler durch Auftreten eines ungewöhnlichen Wertes einer Testmetrik finden. Grundlagen über Metriken sind beispielsweise in [9] zu finden.

Entsprechend der Einteilung der Software-Prüfmetriken SPM kann eine Einteilung der Software-Entwicklungsmetriken SEM erfolgen, deren Aussagekraft entsprechend ist, jedoch mit der Zielrichtung der Software-Entwicklung. Dem Fachmann sind die entsprechenden Änderungen zur Umsetzung der Einteilung der Software-Prüfmetriken SPM auf eine Einteilung der Software-Entwicklungsmetriken SEM geläufig.

Auch die Software-Entwicklungsverfahren SEV lassen sich in unterschiedliche Kategorien einteilen. Grundlagen über verschiedene Software-Entwicklungsverfahren SEV sind in [8] zu finden. Die Einteilung erfolgt ähnlich wie im vorigen beschrieben für die Software-Prüfverfahren SPV.

Die Bestimmung bzw. Auswahl der Rahmenbedingungen, beispielsweise von Prüf-Rahmenbedingungen oder Entwicklungs-Rahmenbedingungen 101, je nach Art des Software-Verfahrens SV, kann beispielsweise dadurch erfolgen, daß der Benutzer von dem Rechner vorgegebene Fragen beantwortet. Die Beantwortung kann entweder einfach durch positive oder negative Beantwortung der jeweiligen Frage durch den Benutzer erfolgen, oder auch durch eine sehr fein granulierte Unterteilung möglicher Gewichtungen einer Antwort in einem beliebigen Skalenbereich, der einen Bereich von geringer bzw. präzisen Übereinstimmung der tatsächlichen Situation bezüglich der Fragen repräsentiert.

Für den Fall, daß das Software-Verfahren SV durch Softwareprüfverfahren SPV vorgegeben wird, haben sich beispielsweise folgende Fragestellungen, die durch den Benutzer beantwortet werden sollten, als vorteilhaft herausgestellt, wobei sich diese Fragen besonders eignen zur Bestimmung von Software-Prüfmethoden SPM bzw. Software-Entwicklungsmethoden SEM:

- Suchen Sie Lösungen für eine frühe Testphase?
- Ist eine geeignete Spezifikation vorhanden?
- Ist die Software-Struktur modular?
- Können Codeteile den entsprechenden Spezifikationen zugeordnet werden?
- Ist der Quellcode verfügbar?
- Ist die Spezifikation in formaler Form vorhanden?
- Ist sehr hohe Korrektheit gefordert?
- Ist der Tester gut qualifiziert?
- Ist die Spezifikation in objektorientierter Form vorhanden?
- Ist ein Zuverlässigkeitsziel definiert?
- Existiert ein Benutzungsprofil?

Diese Fragen zur Bestimmung der Rahmenbedingungen können ebenso für die Auswahl von Software-Entwicklungsverfahren SEV, mit geringen Anpassungen an die jeweilige Situation verwendet werden.

Zur weiteren Auswahl bzw. Bestimmung von Software-Prüftechniken bzw. Software-Entwicklungstechniken haben sich folgende Fragestellungen als vorteilhaft herausgestellt:

- Ist die Kontrollflußkomplexität hoch?
- Ist die Entscheidungskomplexität hoch?
- Ist die Entscheidungsstruktur komplex?
- Ist die Schleifenkomplexität hoch?
- Ist die Datenflußkomplexität hoch?
- Ist die Defs-Komplexität hoch?
- Ist die C-uses-Komplexität hoch?
- Ist die P-uses-Komplexität hoch?
- Ist die Spezifikation als data dictionary, in Backus-Naur-Form oder als Syntaxdiagramm vorhanden?
- Ist die Spezifikation als Transaktionsflußdiagramm oder Datenflußdiagramm vorhanden?
- Ist die Spezifikation als Zustandsautomat oder in SDL vorhanden?
- Ist die Spezifikation in Prosa, als Pseudocode oder als Entscheidungstabelle vorhanden?
- Hängen die Reaktionen nicht nur von den Eingaben, sondern auch von dem Zustand der Software ab?
- Können die Eingaben unabhängig voneinander betrachtet werden?

Für die Auswahl von Software-Prüfwerkzeugen SPW haben sich folgende Fragestellungen als vorteilhaft herausgestellt:

- Handelt es sich um ein großes Softwarepaket?
- Ist die Software eine Weiterentwicklung einer bereits existierenden Version?
- Variiert die Last oder gibt es Lastspitzen innerhalb der Software?
- Handelt es sich um Echtzeit-Software?
- Handelt es sich um ein verteiltes System?
- Wird der Test vom Entwickler durchgeführt?
- Wird eine hohe Programmiersprache (kein Assembler) verwendet?

Die Fragen für die Software-Prüftechniken und für die Software-Prüfwerkzeuge SPW können ohne größere Anpassungen auch entsprechend für die Auswahl bzw. Bestimmung der Software-Entwicklungstechniken und der Software-Entwicklungswerkzeuge verwendet werden.

Für die Auswahl der Software-Prüfmetriken SPM oder Software-Entwicklungsmetriken SEM haben sich folgende Fragestellungen als vorteilhaft herausgestellt:

- Ist ein Testendekriterium für Sie wichtig?
- Ist ein Kriterium zur Beurteilung der Testqualität für Sie wichtig?

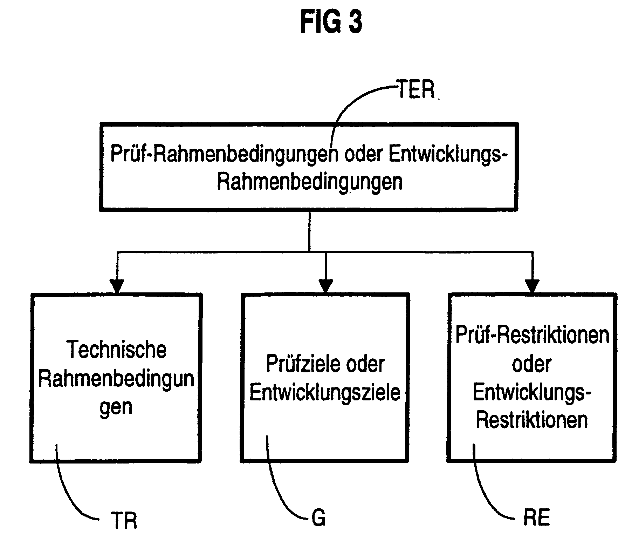

Die im vorigen beschriebenen Fragen dienen alle zur Festlegung von technischen Rahmenbedingungen TR der Prüf-Rahmenbedingungen oder Entwicklungs-Rahmenbedingungen TER (vgl. Figur 3).

Weitere mögliche Prüf-Rahmenbedingungen oder Entwicklungs-Rahmenbedingungen TER sind beispielsweise in Prüfzielen oder Entwicklungszielen G oder auch Prüfrestriktionen oder Entwicklungsrestriktionen RE zu sehen.

Prüfziele oder Entwicklungsziele G werden durch den Rechner R dem Benutzer auf dem Bildschirm BS dargestellt, und der Benutzer hat dann die Möglichkeit, die Bedeutung der einzelnen Prüfziele oder Entwicklungsziele G in der jeweils zu prüfenden oder zu entwickelnden Software anzugeben. Die Priorisierung, also die Zuordnung der Bedeutung der einzelnen Prüfziele oder Entwicklungsziele G kann beispielsweise nach dem in [5] beschriebenen Verfahren, dem sogenannten Quality Function Deployment (QFD) durchgeführt werden.

In einer Weiterbildung des Verfahrens erweist es sich jedoch auch als vorteilhaft, daß jeweils zwei Ziele, beispielsweise Prüfziele oder Entwicklungsziele G, paarweise miteinander verglichen werden und der Benutzer jeweils in dem paarweisen Vergleich anzugeben hat, welches der zu vergleichenden beiden Ziele, Prüfziele oder Entwicklungsziele G, eine größere Bedeutung im Rahmen der zu testenden bzw. zu entwickelnden Software zugeordnet bekommt.

Mögliche Prüfziele oder Entwicklungsziele G sind beispielsweise:

- Softwarequalität,
- Softwarezuverlässigkeit,
- Test- oder Entwicklungsqualität,
- Testvollständigkeit bezüglich des Quellcodes,
- Testvollständigkeit bezüglich der Spezifikation,
- Testtransparenz oder Entwicklungstransparenz im Kleinen bezüglich des Codes,
- Testtransparenz oder Entwicklungstransparenz im Kleinen bezüglich der Funktionalität,
- Testendekriterium bezüglich Testqualität,
- Testendekriterium bezüglich Softwarequalität,
- Wiederholbarkeit,
- Testverwaltung oder Entwicklungsverwaltung im Großen.

In dieser Weiterbildung des Verfahrens sind also drei mögliche Verknüpfungsarten zwischen den Prüfzielen oder den Entwicklungszielen G vorgesehen:

- Ein erstes Ziel ist weniger wichtig als ein zweites Ziel,
- das erste Ziel ist gleich wichtig wie das zweite Ziel,
- das erste Ziel ist wichtiger als das zweite Ziel.

Durch diese Vorgehensweise wird eine Berechnung von Gewichtsfaktoren für die Prüfziele oder Entwicklungsziele G, wie später beschrieben wird, leicht möglich. Auch ist ein Vorteil dieser paarweisen Priorisierung darin zu sehen, daß der Benutzer nicht durch eine sehr große Quantisierung leicht überfordert.wird, da es für den Benutzer einfacher ist, zu entscheiden, ob das erste Ziel wichtiger ist als das zweite Ziel, als beispielsweise nach dem QFD-Verfahren einem Ziel jeweils einen Priorisierungswert, beispielsweise zwischen 0 und 10 zuzuweisen.

Diese paarweise Priorisierung ist auch in einem Verfahren unabhängig von dem erfindungsgemäßen Verfahren vorteilhaft einsetzbar, da es die oben beschriebenen erheblichen Vorteile gegenüber dem QFD-Verfahren aufweist.

Ferner ist ein Vorteil bei dieser Vorgehensweise darin zu sehen, daß eine Konsistenzprüfung der Benutzereingaben bezüglich der Bedeutungen der Prüfziele oder Entwicklungsziele G untereinander leicht durchzuführen ist. Die Konsistenzprüfung wird durchgeführt, indem der Rechner jeweils für das erste Ziel und das zweite Ziel, sowie ein drittes Ziel die Bedeutungen miteinander vergleicht und logische Unstimmigkeiten ermittelt.

Allgemein kann diese Vorgehensweise in einem sehr einfachen Beispiel beschrieben werden mit dem folgenden Vorgehen. Wenn das erste Ziel wichtiger ist als das zweite Ziel und das zweite Ziel wichtiger ist als das dritte Ziel, so folgt daraus notwendigerweise, daß das erste Ziel wichtiger sein muß als das dritte Ziel. Dies wird von dem Rechner in der Konsistenzprüfung überprüft. Ist also das erste Ziel nicht wichtiger als das dritte Ziel, so besteht ein Widerspruch in der Zuordnung von Bedeutungen zu den Prüfzielen oder Entwicklungszielen G. Diese Widersprüche werden dem Benutzer gemeldet, der dann entsprechende Korrekturmaßnahmen durchführt.

Weiterhin können als Prüf-Rahmenbedingungen oder Entwicklungs-Rahmenbedingungen TER auch Prüfrestriktionen oder Entwicklungsrestriktionen RE zu berücksichtigen sein.

Mögliche Prüfrestriktionen oder Entwicklungsrestriktionen RE sind beispielsweise:

- Kosten des Testens bzw. der Entwicklung der Software,
- Zeit, die zum Testen bzw. für die Entwicklung der Software benötigt werden darf,
- Einfachheit des auszuwählenden Software-Prüfverfahrens bzw. Software-Entwicklungsverfahrens SEV,
- Geringe Testfallanzahl, eine Restriktion, die nur für das Prüfen von Software geeignet ist,
- die Restriktion, daß Verfahren ohne Werkzeuge SPW, EPW durchgeführt werden können,
- die Restriktion, daß die erforderlichen Werkzeuge SPW, EPW leicht zu beschaffen sein müssen,
- Unempfindlichkeit bezüglich schlechter Spezifikationen.

Den Prüfrestriktionen oder Entwicklungsrestriktionen RE werden nun wiederum Bedeutungen zugeordnet, jedoch nicht gegenüber anderen Prüfrestriktionen oder Entwicklungsrestriktionen RE, sondern gegenüber den Prüfzielen oder Entwicklungszielen G. Hierbei erweist sich auch die Vorgehensweise des paarweisen Vergleichs und somit der paarweisen Zuordnung der Bedeutungen als vorteilhaft. Es wird für jedes Paar Prüfziel/Prüfrestriktionen bzw. Entwicklungsziel/Entwicklungsrestriktionen von dem Benutzer angegeben, ob ihm das entsprechende Prüfziel oder Entwicklungsziel G oder die entsprechende Prüfrestriktion oder Entwicklungsrestriktion RE wichtiger ist.

In einer Weiterbildung des erfindungsgemäßen Verfahrens erweist es sich als vorteilhaft, für die Ziele G Zielgewichtungsfaktoren zu ermitteln. Dies geschieht, indem beispielsweise für ein erstes Prüfziel oder für ein erstes Entwicklungsziel die Summe aller Bedeutungen gegenüber weiteren Prüfzielen bzw. weiteren Entwicklungszielen gebildet wird und die Summe der Bedeutungen des ersten Prüfziels bzw. des ersten Entwicklungsziels normiert wird auf die Summe aller Bedeutungen aller Prüfziele bzw. Entwicklungsziele G. Somit ergibt sich als Zielgewichtungsfaktor für jedes Prüfziel oder Entwicklungsziel G ein normierter Wert zwischen 0 und 1. Je höher der Wert des Zielgewichtungsfaktors ist, desto bedeutender ist das jeweilige Prüfziel oder Entwicklungsziel G im Rahmen der Softwareprüfung bzw. der Softwareentwicklung.

Die Bildung von Restriktions-Gewichtungsfaktoren für die Prüfrestriktionen oder Entwicklungs-Restriktionen RE erfolgt auf die gleiche Weise wie für die Ermittlung der Zielgewichtungsfaktoren.

Es ist jedoch in einer Weiterbildung des Verfahrens auch vorgesehen, daß jeweils die Bedeutung des Prüfziels oder Entwicklungsziels G gegenüber der Prüfrestriktion oder Entwicklungs-Restriktion RE multipliziert wird mit den im vorigen ermittelten Zielgewichtungsfaktoren, jeweils für das zu bearbeitende Prüfziel oder Entwicklungsziel G. Die mit den Zielgewichtungsfaktoren multiplizierten Bedeutungen der Prüfziele oder Entwicklungsziele G wird wiederum normalisiert und ergibt auch einen Wert zwischen 0 und 1, wobei die Restriktionen RE, denen ein hoher Wert zugewiesen wird, von erhöhter Bedeutung für das Prüfen der Software bzw. die Entwicklung der Software sind.

In einer Regelbasis werden Eignungen unterschiedlicher Software-Verfahren SV bezüglich unterschiedlicher Prüf-Rahmenbedingungen oder Entwicklungs-Rahmenbedingungen gespeichert. Damit sind die einzelnen "Stärken" und "Schwächen" beispielsweise der Prüfmethoden, Prüftechniken, Prüfmetriken oder Prüfwerkzeuge oder Entwicklungsmethoden, Entwicklungstechniken, Entwicklungsmetriken oder Entwicklungswerkzeuge in der Regelbasis gespeichert. Jedes Software-Prüfverfahren SPV oder auch jedes Software-Entwicklungsverfahren SEV eignet sich im Hinblick auf ein bestimmtes Ziel G, einer technischen Rahmenbedingung TR oder auch bezüglich Restriktionen RE mehr oder weniger gut.

Bei der Bewertung der einzelnen Software-Prüfverfahren SPV oder Software-Entwicklungsverfahren SEV sowie der Software-Prüfmetriken SPM und der Software-Entwicklungsmetriken SEM ist es vorteilhaft, folgende Richtlinien gegenüber den Prüfzielen oder Entwicklungszielen G zu beachten.

Software-Prüfverfahren SPV, die für das Ziel "SoftwareQualität" geeignet sind, sind besonders leistungsfähige und aufwendige Verfahren.

Das Ziel "Software-Zuverlässigkeit" wird beispielsweise durch Zufallstestverfahren und Verifikations-Prüfverfahren besonders gut abgedeckt.

Auch für das Ziel "Testqualität" sind die Verfahren zur Verifikation sowie Verfahren des Funktionstests sowie bedingt Strukturtestverfahren gut geeignet.

Dagegen spielen Strukturtestverfahren, beispielsweise das Zweigtestverfahren hinsichtlich des Ziels "Testvollständigkeit bezüglich Code" eine große Rolle.

Funktions-Prüfverfahren eignen sich gut bezüglich des Ziels "Testvollständigkeit bezüglich Spezifikation".

Hinsichtlich des Ziels "Testtransparenz im Kleinen bezüglich Code" eignen sich Strukturtestverfahren gut.

Für das Ziel "Testtransparenz im Kleinen bezüglich Funktionalität" sind Funktionstestverfahren geeignet.

Strukturtestverfahren und Funktionstestverfahren sind für das Erreichen des Ziels "Endekriterium bezüglich Testqualität" sehr vorteilhaft einsetzbar.

Funktionstestverfahren sind bezüglich des Ziels "Endekriterium bezüglich Testqualität" und bezüglich des Ziels "Endekriterium bezüglich Softwarequalität" vorteilhaft einsetzbar.

Das Testwerkzeug Regressionswerkzeug spielt eine wichtige Rolle für das Ziel "Wiederholbarkeit" sowie für das Ziel "Testverwaltung im Großen".

Bezüglich den Restriktionen RE ist es vorteilhaft, für die Software-Prüfverfahren SPV und die Software-Entwicklungsverfahren SEV folgende Richtlinien zu beachten.

Für die Restriktion "Kosten" gilt, daß komplexere Verfahren und strukturorientierte Verfahren höhere Kosten verursachen als einfachere und damit weniger aufwendige Verfahren, sowie funktionsorientierte Verfahren. Komplexen Testverfahren und komplexen Entwicklungsverfahren werden auch bezogen auf die Restriktionen "Zeit", "Einfachheit des Verfahrens" und "geringe Testfallanzahl" schlechte Bewertungen zugewiesen.

Die Restriktion "ohne Werkzeug" wird von den Funktionstestverfahren wenig bzw. gar nicht verletzt. So sind z. B. Verfahren der Äquivalenzklassenbildung geeignet. Die Strukturtestverfahren schneiden jedoch bei der Restriktion "ohne Werkzeug" sehr schlecht ab und erhalten daher bezüglich dieser Restriktion eine schlechte Bewertung.

In Bezug auf die Restriktion "Werkzeug leicht beschaffbar" wird dem Zweigtestverfahren sowie dem Anweisungstestverfahren eine positive Bewertung zugewiesen, da diese auf diese Restriktion nicht empfindlich reagieren. Auch Schleifentestverfahren erweisen sich gegenüber dieser Restriktion als geeignet. Während Bedingungstestverfahren bezüglich der Restriktion "Werkzeug leicht beschaffbar" noch einigermaßen geeignet anwendbar sind, sind andere Strukturtestverfahren eher ungeeignet.

Strukturtestverfahren, der Zufallstest, sowie einfache Funktionstestverfahren sind sehr gut einsetzbar, wenn der Restriktion "Unempfindlichkeit bezüglich schlechter Spezifikationen" eine erhebliche Bedeutung zugemessen wird. Verifikationsverfahren erweisen sich in diesem Fall jedoch als besonders ungünstig, da eine vollständige Spezifikation bei dieser Methode Voraussetzung ist.

In einer Weiterbildung des Verfahrens ist es vorteilhaft, den einzelnen Software-Verfahren SV bezogen auf die einzelnen technischen Rahmenbedingungen TR, den Entwicklungszielen oder Prüfzielen G sowie den Prüfrestriktionen oder Entwicklungs-Restriktionen RE jeweils eine Bewertung im Rahmen eines vorgegebenen Punkteschemas zuzuweisen.

Es hat sich als vorteilhaft erwiesen, beispielsweise bezüglich jedem Prüfziel oder Entwicklungsziel G und bezüglich jeder Prüfrestriktion oder Entwicklungs-Restriktion RE einen Bewertungswert zwischen 0 und 4 zuzuweisen. Ein Software-Prüfverfahren SPV oder Software-Entwicklungsverfahren SEV bekommt beispielsweise für ein erstes Ziel einen Wert 4 zugewiesen, wenn es zu diesem Ziel besonders beiträgt. Umgekehrt erhält es einen geringeren Pluspunkt oder eine 0, wenn das erste Ziel nur bedingt oder gar nicht von dem entsprechenden Software-Prüfverfahren SPV abgedeckt wird. Für jede Restriktion RE, die ein bestimmtes Software-Verfahren SV ungeeignet oder nur bedingt geeignet macht, erhält das entsprechende Software-Verfahren SV Minuspunkte. Die höchste Minuszahl, die vergeben werden kann, beträgt beispielsweise 4, womit eine besonders hohe Empfindlichkeit des Software-Verfahrens SV gegenüber einer bestimmten Restriktion RE beschrieben wird.

Ein Gesamtbewertungswert für ein Software-Verfahren SV wird ermittelt, indem die Summe der Bewertungen des jeweiligen Software-Verfahrens SV bezüglich aller Prüf-Rahmenbedingungen oder Entwicklungs-Rahmenbedingungen TER gebildet wird. Dabei werden die einzelnen Bewertungen mit den jeweiligen Zielgewichtungsfaktoren bzw. Restriktionsgewichtungsfaktoren multipliziert. Je höher der Gesamtbewertungswert für ein Software-Verfahren SV ist, desto mehr eignet sich das Software-Verfahren SV für die jeweiligen Prüf-Rahmenbedingungen oder Entwicklungsrahmenbedingungen TER.

Durch den Einsatz von Fuzzy-Logic, deren Grundlagen in den Dokumenten [6] und [7] beschrieben sind, ist eine hohe Granularität bei der Ermittlung der Rahmenbedingungen TER möglich. Die Software-Verfahren SV werden dem Benutzer auf dem Bildschirm BS dargestellt. Hierbei sind unterschiedliche Varianten zur Darstellung vorgesehen.

Durch den Einsatz von Fuzzy-Logic wird es möglich, die Antworten in beliebiger Genauigkeit zu geben, beispielsweise in einem Prozentwert zwischen 0% und 100%, und diese Werte auch entsprechend bei der Umsetzung in der Regelbasis zu berücksichtigen. Damit ist der Einsatz von Fuzzy-Logic im Rahmen einer Weiterbildung des erfindungsgemäßen Verfahrens sehr vorteilhaft, da auf diese Weise die tatsächlichen Rahmenbedingungen TER sehr genau nachgebildet werden und bei der Auswahl der Software-Verfahren SV auch Alternativvorschläge von Software-Verfahren SV angegeben werden können.

In einer Weiterbildung des Verfahrens ist es auch vorgesehen, den Alternativen jeweils einen Gesamtbewertungswert zuzuordnen, der die Eignung des jeweiligen Software-Verfahrens SV bezüglich der Rahmenbedingungen TER angibt. Somit wird dem Benutzer die Möglichkeit einer Auswahl gegeben, die auf den Gesamtbewertungswerten der einzelnen Software-Verfahren SV beruht.

In einer ersten Variante wird jeweils nur das Software-Verfahren SV, das den höchsten Gesamtbewertungswert aufweist, dem Benutzer dargestellt.

In einer zweiten Variante werden eine beliebige Anzahl von Software-Verfahren SV mit ihren jeweiligen Gesamtbewertungswerten dem Benutzer dargestellt. Diese Vorgehensweise weist den Vorteil auf, daß der Benutzer eine Auswahl von Software-Verfahren SV dargestellt bekommt mit den jeweiligen Gesamtbewertungswerten. Anhand dieser Auswahl kann der Benutzer nunmehr sein "favorisiertes" Software-Verfahren SV auswählen. Hierbei erweist es sich als nützlich, daß mehrere Alternativen von Software-Verfahren SV mit ihrem jeweiligen Gesamtbewertungswert, der die Eignung des jeweiligen Software-Verfahrens SV bezüglich den Rahmenbedingungen beschreibt, angegeben werden. Somit können weitere Einschränkungen, beispielsweise eine Nichtverfügbarkeit bestimmter Software-Verfahren SV von dem Benutzer berücksichtigt werden.

In einer Weiterbildung des Verfahrens ist es vorgesehen, die einzelnen Software-Verfahren SV nicht über einzelne Bewertungen in Form einer Tabelle abzuspeichern, sondern feste Regeln aufzustellen, die das Wissen über Eigenschaften der einzelnen Software-Verfahren SV berücksichtigen und zu dem Gesamtbewertungswert führen.

Ein Beispiel dieser Regeln wird durch die folgende Regel aufgezeigt:

Wenn "die Testphase früh ist"
und die Spezifikation verfügbar ist
und die Softwarestruktur modular ist
und eine Beziehung zwischen Spezifikation und dem Code besteht und der Code verfügbar ist,
dann
ist eine Kombination von Funktionstestverfahren und Strukturtestverfahren als Software-Verfahren SV geeignet.

Bei zusätzlicher Verwendung der Fuzzy-Logic werden in diesen Beispielen durch den Benutzer den einzelnen Fragen beispielsweise folgende Werte zugeordnet:

Suchen Sie Lösungen frühe Testphase?
Von dem Benutzer eingegebener Wert: 1,0

Ist eine geeignete Spezifikation vorhanden?
Von dem Benutzer eingegebener Wert: 0,9

Ist die Softwarestruktur modular?
Von dem Benutzer eingegebener Wert: 0,9

Können Quellcodeteile den entsprechenden Spezifikationen zugeordnet werden?
Von dem Benutzer eingegebener Wert:: 1,0

Ist der Quellcode verfügbar?
Von dem Benutzer eingegebener Wert: 1,0

Bei der üblichen Vorgehensweise bei Verwendung der Fuzzy-Logic wird der Aussage "die Kombination von Funktionstestverfahren und Strukturtestverfahren ist geeignet" das Minimum aller den obigen Fragen zugeordneten Werte verwendet, in diesem Fall also der Wert 0,9. Der Wert 0,9 gibt also dann den Gesamtbewertungswert für die Kombination des Funktionstestverfahrens und Strukturtestverfahrens als Software-Verfahren SV an.

In einer Weiterbildung des erfindungsgemäßen Verfahrens ist es jedoch sinnvoll, anstatt des üblichen UND-Operators, mit dem lediglich das Minimum aller Prämissen der jeweiligen Regel als Gesamtbewertungswert verwendet wird, einen kompensatorischen UND-Operator zu verwenden. Durch den kompensatorischen UND-Operator werden unterschiedliche Prämissen unterschiedlich gewichtet.

Anhand eines Beispiels für zwei Prämissen wird ein kompensatorischer UND-Operator, der in dem erfindungsgemäßen Verfahren vorteilhaft einsetzbar ist, nun kurz beschrieben. Der kompensatorische UND-Operator wird beispielsweise gebildet nach der Vorschrift:

$$\gamma((w_1,a_1),(w_2,a_2)) = \gamma \cdot MIN(a_1,a_2) + (1 - \gamma)\frac{(w_1 \cdot a_1 + w_2 \cdot a_2)}{(w_1 + w_2)},$$

wobei mit

$a_1, a_2$     jeweils einen Wert einer Zugehörigkeitsfunktion für jeweils eine Prämisse beschrieben wird,

$w_1, w_2$     jeweils ein Gewicht des Werts der Zugehörigkeitsfunktion beschrieben wird,

$\gamma$     ein Parameter beschrieben wird, mit dem die Eigenschaft des kompensatorischen UND-Operators bestimmt wird.

In diesem Dokument wurden folgende Veröffentlichungen zitiert:

[1] E. Weyuker, Axiomating software test data adequacy, IEEE Transactions on Software Engineering, Vol. SE-12, Nr. 12, S. 1128 - 1138, Dezember 1986

[2] P. Frankl et al, An experimental comparison of the effectiveness of branch testing and data flow testing, IEEE Transactions on Software Engineering, Vol. 19, Nr. 8, S. 774 - 787, August 1993

[3] L. Clarke et al, A formal evaluation of data flow part selection criteria, IEEE Transactions on Software Engineering, Vol. 15, Nr. 11, S. 1318 - 1331, November 1989

[4] P. Liggesmeyer, Modultest und Modulverifikation: State of the art, BI Wissenschafts-Verlag, Mannheim, Zürich, Wien, ISBN 3-411-14361-4, S. 47 - 63, 1990

[5] R. Zultner, Before the house, the voices of the customers in QFD, 3rd Symposium on QFD, Princeton, S. 1 - 10, Juni 1991

[6] T. Wolf, Das Fuzzy-Mobil, mc, S. 50 - 63, März 1991

[7] C. von Altrock, Über den Daumen gepeilt, c't, Heft 3, S. 188 - 200, 1991

[8] B. Pagel und H. Six, Softwareengineering, Band 1, Addison Wesley Verlag, ISBN, 3-89319-735-4, 1. Auflage, S. 151 - 226, 1994

[9] B. Beizer, Software testing techniques, Van Nostrand Reinhold Verlag, New York, ISBN 0-442-20672-0, 2. Auflage, S. 213 - 242, 1990

**Patentansprüche**

**1.** Verfahren zur rechnergestützten Auswahl von Software-Verfahren (SV), beispielsweise Software-Prüfverfahren (STV), Software-Entwicklungsverfahren(SEV), Software-Prüfmetriken (STM) oder Software-Entwicklungsmetriken (SEM), mit Hilfe eines Rechners (R),

- bei dem von einem Benutzer Rahmenbedingungen ausgewählt werden, die von dem Rechner (R) auf einem Bildschirm (BS) dem Benutzer zur Auswahl angeboten werden (101),
- bei dem anhand der ausgewählten Rahmenbedingungen sowie einer Regelbasis, mit der Eignungen unterschiedlicher Software-Verfahren bezüglich unterschiedlichen Rahmenbedingungen beschrieben werden, mindestens ein für die ausgewählten Rahmenbedingungen geeignetes Software-Verfahren ermittelt wird (102), und
- bei dem dem Benutzer das ermittelte Software-Verfahren von dem Rechner auf dem Bildschirm dargestellt wird (103).

**2.** Verfahren nach Anspruch 1,
bei dem das Verfahren unter Verwendung von Fuzzy-Logic durchgeführt wird.

**3.** Verfahren nach Anspruch 1 oder 2,
bei dem die Rahmenbedingungen durch technische Rahmenbedingungen (TR) beschrieben werden.

**4.** Verfahren nach einem der Ansprüche 1 bis 3,
bei dem die Rahmenbedingungen durch Ziele (G) beschrieben werden.

**5.** Verfahren nach einem der Ansprüche 1 bis 4,
bei dem die Rahmenbedingungen durch Restriktionen (RE) beschrieben werden.

**6.** Verfahren nach einem der Ansprüche 1 bis 5,
bei dem den Rahmenbedingungen unterschiedliche Bedeutungen zugeordnet werden.

**7.** Verfahren nach den Ansprüchen 4 und 6,
bei dem die Bedeutungen der Ziele paarweise für jeweils zwei Ziele zugeordnet werden.

**8.** Verfahren nach Anspruch 7,
bei dem eine Konsistenzprüfung für die einzelnen Bedeutungen der Ziele durchgeführt wird.

**9.** Verfahren nach einem der Ansprüche 1 bis 8,
bei dem die Software-Verfahren mindestens eine der folgenden Software-Verfahren aufweisen:

- mindestens ein Software-Prüfverfahren,
- mindestens eine Software-Prüftechnik,
- mindestens ein Software-Prüfwerkzeug,
- mindestens eine Software-Prüfmetrik,
- mindestens ein Software-Entwicklungsverfahren,
- mindestens eine Software-Entwicklungstechnik,
- mindestens ein Software-Entwicklungswerkzeug,
- mindestens eine Software-Entwicklungsmetrik.

**10.** Verfahren nach einem der Ansprüche 1 bis 9,
bei dem die Software-Verfahren mindestens zwei der folgenden Software-Verfahren aufweisen:

- mindestens ein Software-Prüfverfahren,
- mindestens eine Software-Prüftechnik,
- mindestens ein Software-Prüfwerkzeug,
- mindestens eine Software-Prüfmetrik,
- mindestens ein Software-Entwicklungsverfahren,
- mindestens eine Software-Entwicklungstechnik,
- mindestens ein Software-Entwicklungswerkzeug,
- mindestens eine Software-Entwicklungsmetrik.

**11.** Verfahren nach einem der Ansprüche 1 bis 10,

- bei dem zuerst das Software-Verfahren ermittelt wird, und
- bei dem anschließend die Software-Technik oder das Software-Werkzeug unter Berücksichtigung des ermittelten Software-Verfahrens ermittelt wird.

**12.** Verfahren nach Anspruch 11,

- bei dem die Software-Technik vor dem Software-Werkzeug ermittelt werden, und
- bei dem das Software-Werkzeug unter Berücksichtigung der ermittelten Software-Technik ermittelt wird.

**13.** Verfahren nach einem der Ansprüche 1 bis 12,
bei dem für mindestens ein ermitteltes Software-Verfahren Rahmenbedingungen verändert werden.

**14.** Verfahren nach Anspruch 2,
bei dem bei der Fuzzy-Logic ein kompensatorischer UND-Operator verwendet wird.

**15.** Verfahren nach Anspruch 14,
bei dem der kompensatorische UND-Operator gebildet wird nach der Vorschrift:

$$\gamma((w_1,a_1),(w_2,a_2)) = \gamma \cdot MIN(a_1,a_2) + (1 - \gamma)\frac{(w_1 \cdot a_1 + w_2 \cdot a_2)}{(w_1 + w_2)},$$

wobei mit

$a_1, a_2$      jeweils einen Wert einer Zugehörigkeitsfunktion beschrieben wird,
$w_1, w_2$      jeweils ein Gewicht des Werts der Zugehörigkeitsfunktion beschrieben wird,
$\gamma$      ein Parameter beschrieben wird, mit dem die Eigenschaft des kompensatorischen UND-Operators bestimmt wird.

**Claims**

**1.** Procedure for the computer-assisted selection of software procedures (SV), for example software test procedures (STV), software development procedures (SEV), software test metrics (STM) or software development metrics (SEM), using a computer (R),

- in which a user selects boundary conditions which the computer (R) presents (101) to the user for selection on a screen (BS),
- in which the selected boundary conditions and a rule base which describes suitabilities of different software procedures with regard to different boundary conditions are used to ascertain (102) at least one software procedure which is suitable for the selected boundary conditions, and
- in which the computer displays (103) the ascertained software procedure to the user on the screen.

**2.** Procedure according to Claim 1,
in which the procedure is carried out using fuzzy logic.

**3.** Procedure according to Claim 1 or 2,
in which the boundary conditions are described by technical boundary conditions (TR).

**4.** Procedure according to one of Claims 1 to 3,
in which the boundary conditions are described by goals (G).

**5.** Procedure according to one of Claims 1 to 4,
in which the boundary conditions are described by restrictions (RE).

**6.** Procedure according to one of Claims 1 to 5,
in which the boundary conditions are allocated different significances.

**7.** Procedure according to Claims 4 and 6,
in which the significances of the goals are allocated in pairs for two respective goals.

**8.** Procedure according to Claim 7,
in which a consistency check is carried out for the individual significances of the goals.

**9.** Procedure according to one of Claims 1 to 8,
in which the software procedures comprise at least one of the following software procedures:

- at least one software test: procedure,
- at least one software test: technique,
- at least one software test: tool,
- at least one software test: metric,
- at least one software development procedure,
- at least one software development technique,

- at least one software development tool,
- at least one software development metric.

**10.** Procedure according to one of Claims 1 to 9,
in which the software procedures comprise at least two of the following software procedures:

- at least one software test procedure,
- at least one software test technique,
- at least one software test tool,
- at least one software test metric,
- at least one software development procedure,
- at least one software development technique,
- at least one software development tool,
- at least one software development metric.

**11.** Procedure according to one of Claims 1 to 10,

- in which the software procedure is fist ascertained, and
- in which the software technique or the software tool is then ascertained taking into account the ascertained software procedure.

**12.** Procedure according to Claim 11,

- in which the software technique is ascertained before the software tool, and
- in which the software tool is ascertained taking into account the ascertained software technique.

**13.** Procedure according to one of Claims 1 to 12,
in which boundary conditions are altered for at least one software procedure ascertained.

**14.** Procedure according to Claim 2,
in which the fuzzy logic uses a compensatory AND operator.

**15.** Procedure according to Claim 14,
in which the compensatory AND operator is formed on the basis of the following code:

$$\gamma((w_1,a_1),(w_2,a_2)) = \gamma \cdot \text{MIN}(a_1,a_2) + (1 - \gamma)\frac{(w_1 \cdot a_1 + w_2 \cdot a_2)}{(w_1 + w_2)},$$

where

$a_1$, $a_2$ describe a respective value for an association function,
$w_1$, $w_2$ describe a respective weight for the value of the association function,
$\gamma$ describes a parameter used to determine the characteristic of the compensatory AND operator.

**Revendications**

**1.** Procédé de sélection assisté par ordinateur de procédés logiciels (SV), par exemple de procédés de test de logiciels (STV), de procédés de développement de logiciels (SEV), de métriques de test de logiciels (STM) ou de métriques de développement de logiciels (SEM), à l'aide d'un ordinateur (R),

- dans lequel l'utilisateur sélectionne des conditions-cadre que l'ordinateur (R) lui soumet, à l'écran (BS), pour qu'il fasse une sélection (101),
- dans lequel est déterminé, sur base des conditions-cadre sélectionnées et d'une base de réglage permettant de décrire si différents procédés logiciels satisfont aux différentes conditions-cadre, au moins un procédé logiciel satisfaisant aux conditions-cadre sélectionnées (102) et
- dans lequel l'ordinateur représente à l'écran, pour l'uilisateur, le procédé logiciel qui a été déterminé (103).

**2.** Procédé selon la revendication 1,
dans lequel le procédé est exécuté, une logique Fuzzy étant appliquée.

**3.** Procédé selon la revendication 1 ou 2,
dans lequel les conditions-cadre sont décrites par des conditions-cadre techniques (TR).

**4.** Procédé selon l'une des revendications 1 à 3,
dans lequel les conditions-cadre sont décrites par des objectifs (G).

**5.** Procédé selon l'une des revendications 1 à 4,
dans lequel les conditions-cadre sont décrites par des restrictions (RE).

**6.** Procédé selon l'une des revendications 1 à 5,
dans lequel différentes significations sont attribuées aux conditions-cadre.

**7.** Procédé selon les revendications 4 et 6,
dans lequel les significations des objectifs sont attribuées par paires pour deux objectifs dans chaque cas.

**8.** Procédé selon la revendication 7,
dans lequel un contrôle de consistance est exécuté pour chacune des significations des objectifs.

**9.** Procédé selon l'une des revendications 1 à 8,
dans lequel les procédés logiciels présentent au moins l'un des procédés logiciels suivants :

- au moins un procédé de test de logiciels,
- au moins une technique de test de logiciels,
- au moins un outil de test de logiciels,
- au moins une métrique de test de logiciels,
- au moins un procédé de développement de logiciels,
- au moins une technique de développement de logiciels,
- au moins un outil de développement de logiciels,
- au moins une métrique de développement de logiciels.

**10.** Procédé selon l'une des revendications 1 à 9,
dans lequel les procédés logiciels présentent au moins deux des procédés logiciels suivants :

- au moins un procédé de test de logiciels,
- au moins une technique de test de logiciels,
- au moins un outil de test de logiciels,
- au moins une métrique de test de logiciels,
- au moins un procédé de développement de logiciels,
- au moins une technique de développement de logiciels,
- au moins un outil de développement de logiciels,
- au moins une métrique de développement de logiciels.

**11.** Procédé selon l'une des revendications 1 à 10,

- dans lequel le procédé logiciel est d'abord déterminé et
- dans lequel la technique logiciel ou l'outil logiciel sont ensuite déterminés compte tenu du procédé logiciel qui a été déterminé.

**12.** Procédé selon la revendication 11,

- dans lequel la technique logiciel est déterminée avant l'outil logiciel et
- dans lequel l'outil logiciel est déterminé compte tenu de la technique logiciel qui a été déterminée.

**13.** Procédé selon l'une des revendication 1 à 12,
dans lequel les conditions-cadre sont modifiées pour au moins un procédé logiciel qui a été déterminé.

**14.** Procédé selon la revendication 2,
dans lequel la logique Fuzzy fait appel à un opérateur ET de compensation.

**15.** Procédé selon la revendication 14,
dans lequel l'opérateur ET de compensation est formé conformément à la règle :

$$\gamma\left((w_1,a_1), (w_2,a_2)\right) = \gamma \cdot MIN(a_1,a_2) + (1 - \gamma)\frac{(w_1 \cdot a_1 + w_2 \cdot a_2)}{(w_1 + w_2)},$$

$a_1$, $a_2$ décrivant chacun une valeur d'une fonction d'appartenance,
$w_1$, $w_2$ décrivant chacun un poids de la valeur de la fonction d'appartenance,
$\gamma$ décrivant un paramètre définissant la caractéristique de l'opérateur ET de compensation.

# FIG 1

```
┌─────────────────────────────────────────────────────┐
│   Auswählen von Prüf-Rahmenbedingungen oder           │
│  Entwicklungs-Rahmenbedingungen, die von einem        │
│         Rechner angeboten werden                      │
└─────────────────────────────────────────────────────┘
                                              ⌐ 101
                        │
                        ▼
┌─────────────────────────────────────────────────────┐
│ Ermittlung mindestens einer Software-Verfahren anhand │
│   von Prüf-Rahmenbedingungen oder Entwicklungs-       │
│     Rahmenbedingungen und einer Regelbasis            │
└─────────────────────────────────────────────────────┘
                                              ⌐ 102
                        │
                        ▼
┌─────────────────────────────────────────────────────┐
│Darstellung der ermittelten Software-Verfahren auf einem│
│                  Bildschirm                           │
└─────────────────────────────────────────────────────┘
                                              ⌐ 103
```

# FIG 2

BS

R

TA

MA

# FIG 3

```
                                    ┌─TER.
                    ┌───────────────┴──────────────────────┐
                    │ Prüf-Rahmenbedingungen oder Entwicklungs- │
                    │          Rahmenbedingungen              │
                    └────────────────────┬───────────────────┘
            ┌────────────────────────────┼────────────────────────────┐
            ▼                            ▼                            ▼
    ┌───────────────┐           ┌───────────────┐           ┌───────────────┐
    │   Technische   │           │  Prüfziele oder │           │ Prüf-Restriktionen │
    │ Rahmenbedingun │           │ Entwicklungsziele │         │      oder       │
    │      gen       │           │                 │           │  Entwicklungs-   │
    │                │           │                 │           │  Restriktionen   │
    └───────────────┘           └───────────────┘           └───────────────┘
            └─ TR                        └─G                         └─ RE
```

## FIG 4

SV

Software-
Verfahren

Software-
Prüfverfahren

SPV

Software-
Entwicklungsverfahren

SEV

Software-
Prüfmetriken

SPM

Software-
Entwicklungsmetriken

SEM

Software-
Prüfwerkzeuge

SPW

Software-
Entwicklungswerkzeuge

SEW